# EUROPÄISCHE PATENTSCHRIFT

(11) **EP 1 012 193 B1**
(45) Veröffentlichungstag und Bekanntmachung des Hinweises auf die Patenterteilung: **17.07.2002**
(21) Anmeldenummer: 98946384.9
(22) Anmeldetag: 19.08.1998
(51) Int. Cl.: C08F 4/629, C08F 10/00

(54) **KATALYSATORZUBEREITUNG FÜR DIE (CO)POLYMERISATION VON ALK-1-ENEN**
CATALYST PREPARATION FOR THE (CO)POLYMERISATION OF ALK-1-ENES
PREPARATION CATALYSATEUR DESTINEE A LA (CO)POLYMERISATION D'ALC-1-ENES

(30) Priorität: 27.08.1997 DE 19737306
(43) Veröffentlichungstag der Anmeldung: 28.06.2000
(73) Patentinhaber: Basell Polyolefine GmbH, 77694 Kehl (DE)
(72) Erfinder: GONIOUKH, Andrei, D-67373 Dudenhofen (DE); DECKERS, Andreas, D-55234 Flomborn (DE); SCHAUSS, Eckard, D-67259 Heuchelheim (DE); KLIMESCH, Roger, D-64665 Alsbach-Hähnlein (DE); WEBER, Wilhelm, D-67435 Neustadt (DE)
(86) Internationale Anmeldenummer: EP9805274
(87) Internationale Veröffentlichungsnummer: WO9910388

(56) Entgegenhaltungen:
- EP-A- 0 675 138
- EP-A- 0 741 146

## Beschreibung

Die vorliegende Erfindung betrifft eine für die (Co)polymerisatiön von Alk-1-enen geeignete Katalysatorzubereitung, erhältlich durch
a) Mischen eines Metallocenkomplexes der allgemeinen Formel (I) 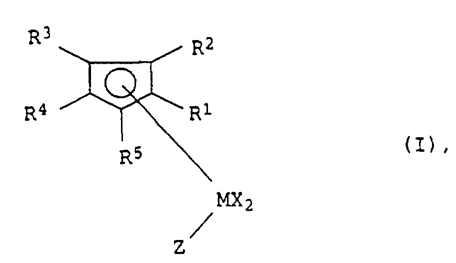 in der die Substituenten folgende Bedeutung haben:
   - M: Titan, Zirkonium, Hafnium, Vanadium, Niob oder Tantal
   - X: Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
   wobei.
   - R⁶ und R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
   - R¹ bis R⁵: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende, gesättigte oder ungesättigte cyclische Gruppen stehen können, oder Si(R⁸)₃ mit
   - R⁸: C₁- bis C₁₀-Alkyl, C₃- bis C₁₀-Cycloalkyl oder C₆bis C₁₅-Aryl,
   - Z: für X oder 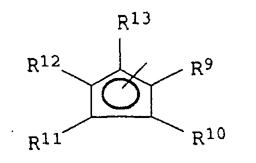 steht,
   wobei die Reste
   - R⁹ bis R¹³: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende, gesättigte oder ungesättigte cyclische Gruppen stehen können, oder Si(R¹⁴)₃ mit
   - R¹⁴: C₁- bis C₁₀-Alkyl, C₆- bis C₁₅-Aryl oder C₃- bis C₁₀-Cycloalkyl,
   oder wobei die Reste R⁴ und Z gemeinsam eine Gruppierung - R¹⁵-A- bilden, in der
   - R¹⁵: 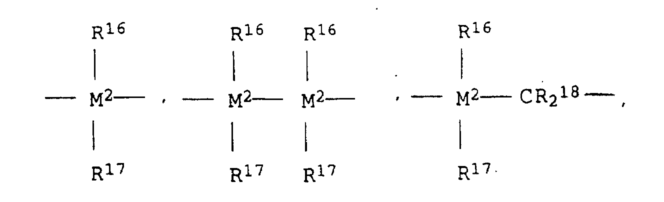 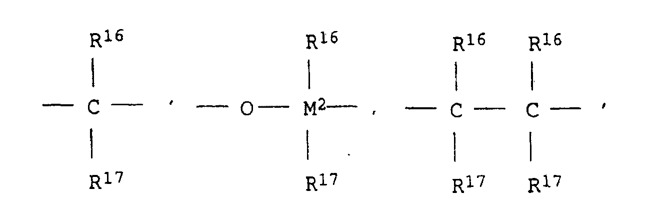 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
   wobei
   - R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
   - M²: Silicium, Germanium oder Zinn ist,
   - A: ―O―, ―S―, 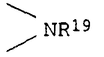 oder 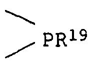 bedeuten, mit
   - R¹⁹: C₁- bis C₁₀-Alkyl, C₆- bis C₁₅-Aryl, C₃- bis C₁₀-Cycloalkyl, Alkylaryl oder Si(R²⁰)₃,
   - R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
   oder wobei die Reste R⁴ und R¹² gemeinsam eine Gruppierung - R¹⁵- bilden,
   mit einem C₃- bis C₂₀-Alk-1-en in einem inerten Lösungsmittel, wobei das molare Verhältnis von Metallocenkomplex zu Alk-1-en im Bereich von 1:0,1 bis 1:100 liegt,
b) kontrollierte Umsetzung der Mischung nach a) mit einer metalloceniumionenbildenden Verbindung (II) und
c) Verdünnen der Mischung nach b) mit einem inerten unpolaren, im wesentlichen aliphatischen Lösungsmittel sowie gegebenenfalls
d) Aufbringen der Katalysatorzubereitung nach c) auf ein partikuläres Trägermaterial.

Weiterhin betrifft die vorliegende Erfindung ein Verfahren zur Herstellung dieser Katalysatorzubereitung, ein Verfahren zur Herstellung von Alk-1-en-(Co)polymeren in Gegenwart dieser Katalysatorzubereitung sowie die Verwendung dieser Katalysatorzubereitung zur Polymerisation von Alk-1-enen.

Kationisch aktivierte Metallocenkatalysatorsysteme für die Olefin(co)polymerisation sind hinlänglich bekannt. Für die Herstellung dieser im allgemeinen auf mehrere Komponenten zurückgehenden Systeme kann auf unterschiedliche Verfahrensvarianten zurückgegriffen werden. In der JP 0 5320240 wird zum Beispiel die getrennte Zugabe der Einzelkomponenten - alkylierter Metallocenkomplex, nicht koordinierendes Anion und Metallalkylverbindung - zum Polymerisationsgefäß beschrieben. Wird der polymerisationsaktive Kationenkomplex räumlich getrennt vom Polymerisationssystem hergestellt, ist im allgemeinen die Polarität der Katalysatorspezies bei der Wahl des zu verwendenden Lösungsmittelsystems mitzuberücksichtigen. Denn die Struktur vieler Metallkomlexe, besonders jedoch die Struktur der Aktivierungsreagenzien sowie der im Verlauf der Aktivierung gebildeten Ionenpaare aus kationischem Metallocenkomplex und anionischem nicht-koordinierenden Gegenion machen für diese Umsetzung in der Regel mäßig polare Lösungsmittel erforderlich, beispielsweise aromatische oder halogenierte Kohlenwassserstoffe. So wird in EP-A-709 393 die kationische Aktivierung von Metallocenkomplexen mit substituierten Fluorphenylliganden in Toluol als Lösungsmittel beschrieben. In WO-93/25590 wird ebenfalls die kationische Aktivierung von Metallocenkomplexen beschrieben, wobei für diese Umsetzungen vorzugsweise aromatische Lösungsmittel, insbesondere Toluol (s. Beispiele) verwendet werden. Die ebenfalls angeführten geradkettigen, verzweigten oder alicyclischen Kohlenwasserstoffe haben sich im allgemeinen für diesen Zweck als ungeeignet erwiesen, da sie insbesondere die kationischen Metallocenkomplexe sowie die Aktivierungsreagenzien nur unzureichend zu lösen vermögen. Als Vorstufe der kationisch aktivierten Katalysatorspezies wird in dem genannten Dokument ein binuklearer Übergangsmetallkomplex beschrieben. Bochmann et al. (J. Chem. Soc., Dalton Trans., 1996, S. 255-270) konnten als Zwischen- bzw. Nebenprodukte bei der kationischen Metallocenaktivierung ebenfalls binukleare Systeme nachweisen. Diese Komplexe verfügen, wenn überhaupt, nur über eine sehr geringe Katalysatoraktivität und leisten keinen Beitrag zur Erhöhung der Katalysatorproduktivität. Sie bilden zudem einen in aliphatischen Lösungsmitteln unlöslichen Niederschlag, der den Produktionsprozeß bei der Polymerherstellung nachhaltig behindern kann.

Die kationisch aktivierten Metallocenkomplexe können auch in ungeträgerter Form vorteilhaft in Slurry- oder Lösungspolymerisationsverfahren eingesetzt werden. Als Lösungsmittel für diese Polymerisationsverfahren, insbesondere für Polymerisationsverfahren bei hoher Temperatur und hohem Druck, haben sich besonders aliphatische Lösungsmittel, insbesondere gesättigte Kohlenwasserstoffe als geeignet erwiesen. Aromatische und halogenierte Kohlenwasserstoffe weisen dagegen Nachteile auf, die vermutlich auf ihre Reaktivität und auf eine Zerstörung oder Blockierung des Katalysators durch diese Verbindungen zurückzuführen sind. Bei Polymerisationen in diesen Lösungsmitteln wird demzufolge eine geringere Katalysatorproduktivität, ein größerer Bedarf an Alkylverbindungen zur Beseitigung von Verunreinigungen sowie ein erhöhter Anteil von wachsartigen Nebenprodukten in den Polymeren beobachtet.

Die mangelhafte Löslichkeit und damit auch die geringe Produktivität von kationisch aktivierten Metallocenkatalysatoren in aliphatischen Lösungsmitteln machte bisher jedoch meist die Verwendung aromatischer Lösungsmittel in solchen Lösungspolymerisationsverfahren erforderlich.

Es wäre demzufolge wünschenswert, auf kationisch aktivierte Metallocenkatalysatorsysteme zurückgreifen zu können, die auch in aliphatischen Lösungsmitteln gut löslich und insbesondere unter den Bedingungen der Hochdruckpolymerisation stabil sind und gute Produktivitäten liefern. Des weiteren wäre es wünschenswert, die Konzentration an reaktiver Katalysatorspezies während des gesamten Polymerisationsprozesses kontrollieren zu können, um auch bei großtechnischen Anwendungen zu einheitlichen Produktzusammensetzungen zu gelangen und um prozeßtechnische Störungen bei der Polymerisation zu vermeiden.

Der vorliegenden Erfindung lag daher die Aufgabe zugrunde, kationisch aktivierte Metallocenkatalysatorzubereitungen zur Verfügung zu stellen, die in aliphatischen Lösungsmitteln löslich sind und gute Produktivitäten bei der (Co)polymerisation von Alk-1-enen zeigen.

Demgemäß wurde die eingangs beschriebene Katalysatorzubereitung, ein Verfahren zur Herstellung dieser Katalysatorzubereitung, ein Verfahren zur (Co)polymerisation von Alk-1-enen in Gegenwart dieser Katalysatorzubereitung sowie die Verwendung dieser Katalysatorzubereitung zur Polymerisaton von Alk-1-enen gefunden.

Von den Metallocenkomplexen der allgemeinen Formel (I) sind 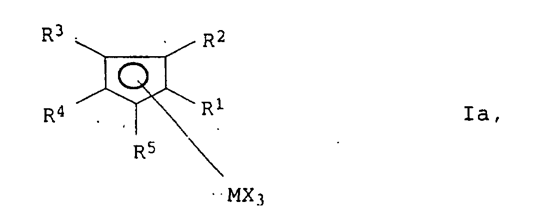 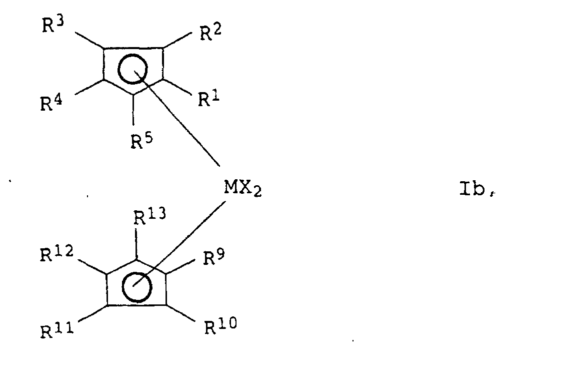 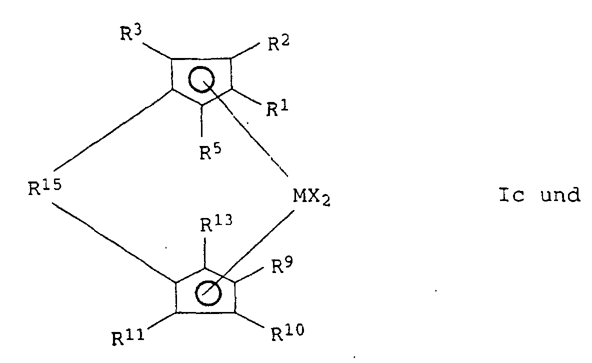 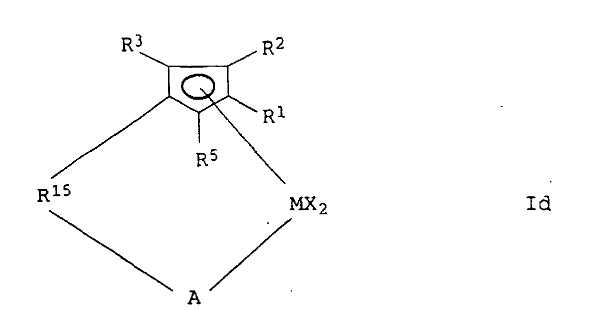 bevorzugt.

Besonders bevorzugt sind solche Übergangsmetallkomplexe, welche zwei miteinander verbrückte aromatische Ringsysteme als Liganden enthalten, also besonders die Übergangsmetallkomplexe der allgemeinen Formel Ic.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: C₁-bis C₄-Alkyl oder Phenyl und
- R¹ bis R⁵: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für C₁-bis C₄-Alkyl oder Phenyl,
- R¹ bis R⁵: Wasserstoff, C₁- bis C₄-Alkyl oder Si(R⁸)₃,
- R⁹ bis R¹³: Wasserstoff, C₁- bis C₄-Alkyl oder Si(R¹⁴)₃ bedeuten.

Insbesondere sind die Verbindungen der Formel Ib geeignet, in denen die Cyclopentadienylreste gleich sind.

Beispiele für besonders geeignete Metallocenverbindungen Ib sind u.a. solche, die sich von den folgenden Ausgangsverbindungen ableiten:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid, wobei bevorzugt unter den entsprechenden Dimethylzirkoniumverbindungen ausgewählt wird.

Von den Verbindungen der Formel Ic sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen
- R², R³, R¹⁰ und R¹¹: die Bedeutung
R³ und R¹¹ C₁- bis C₄-Alkyl
R² und R¹⁰ Wasserstoff
haben oder zwei benachbarte Reste R² und R³ sowie
R¹⁰ und R¹¹ gemeinsam für 4 bis 12 C-Atome aufweisende cyclische Gruppen stehen,
- R¹⁵: für 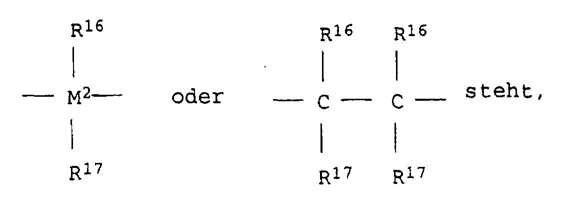
- M: für Titan, Zirkonium oder Hafnium und
- X: für C₁-bis C₄-Alkyl oder Phenyl stehen.

Beispiele für besonders geeignete Komplexverbindungen Ic sind u.a. solche, die sich von den folgenden Ausgangsverbindungen ableiten:
Dimethylsilandiylbis (cyclopentadienyl)-zirkoniumdichlorid,
Dimethylsilandiylbis(indenyl)-zirkoniumdichlorid,
Dimethylsilandiylbis (tetrahydroindenyl) -zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis (-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid, wobei bevorzugt unter den entsprechenden Dimethylzirkoniumverbindungen ausgewählt wird.

Bei den Verbindungen der allgemeinen Formel Id sind als besonders geeignet diejenigen zu nennen, in denen
- M: für Titan oder Zirkonium,
- X: für C₁-bis C₄-Alkyl oder Phenyl stehen.
- R¹⁵: für 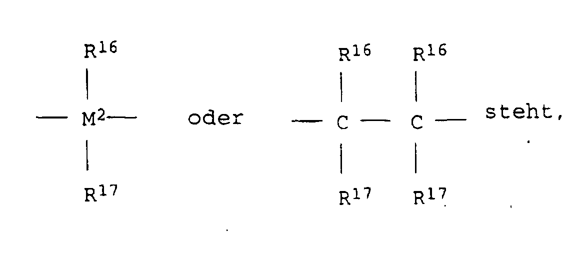
- A: für ―O―, ―S―, 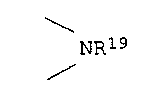 und
- R¹ bis R³ und R⁵: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

In Reaktionsschritt a) können die verschiedensten C₃- bis C₂₀-Alk-1-ene mit einem Metallocenkomplex (I) umgesetzt werden.Bevorzugt sind solche mit 3 bis 16 C-Atomen in der Kette. Diese Alk-1-ene können geradkettig oder verzweigt sein. Beispielsweise seien genannt But-1-en, 3-Methyl-but-1-en, Pent-1-en, 3-Methylpent-1-en, 4-Methyl-pent-1-en, Hex-1-en, Hept-1-en, Oct-1-en, Dec-1-en oder Dodec-1-en. Besonders bevorzugt werden in Schritt a) Buten, Hexen oder Octen zugesetzt. Es können auch beliebige Gemische der genannten Alk-1-ene eingesetzt werden. Das molare Verhältnis von Metallocenkomplex (I) zu Alk-1-en in Schritt a) liegt im allgemeinen im Bereich von 1:0,1 bis 1:100, vorzugsweise im Bereich von 1:1 bis 1:10. Bereits ein geringer Überschuß an Alk-1-en bewirkt in der Regel eine deutliche Erhöhung der Löslichkeit des kationisch aktivierten Metallocenkompolexes in aliphatischen Lösungsmitteln. Insbesondere bei längerkettigen Alk-1-enen, etwa mit 6 bis 12 C-Atomen, ist ein äquimolarer Zusatz oft ausreichend, bei kürzeren Alk-1-enen empfiehlt sich die Verwendung eines Überschusses. Nach anfänglicher Zugabe des Alk-1-ens in Reaktionsschritt a) können auch geringe Mengen interner Alkene wie 2-Buten, 2-Penten, 2- oder 3-Hexen als E- oder Z-Isomere, insbesondere Z-Isomere, oder cyclischer Alkene wie Cyclohexen beigemengt werden.

Der Umsetzungsschritt a) des Metallocenkomplexes (I) mit einem Alk-1-en wird üblicherweise in einem inerten Lösungsmittel vorgenommen. Zumeist handelt es sich dabei um ein mäßig polares Lösungsmittel, damit die Reaktionskomponenten in möglichst geringem Volumen ausreichend in Lösung gehalten werden können. Vorzugsweise wird der Schritt a) in Gegenwart eines aromatischen Lösungsmittels wie Toluol, Ethylbenzol oder Xylol oder eines halogenierten Kohlenwasserstoffes wie Dichlormethan oder Chloroform vorgenommen, besonders bevorzugt in Gegenwart von Toluol oder Xylol. Auch die Verwendung von Lösungsmittelgemischen kommt in Betracht.

Die Umsetzung mit dem Alk-1-en in Schritt a) führt man im allgemeinen bei Temperaturen zwischen -90 bis 150°C, vorzugsweise bei 30 bis 110°C durch, wobei die Reaktionszeit mindestens 0,1 Sekunden betragen sollte.

Die Alk-1-ene können als solche oder in Form einer Lösung, vorzugsweise gelöst in einem inerten Lösungsmittel, z.B. wie weiter oben für Schritt a) ausgeführt, eingesetzt werden. Es hat sich in den meisten Fällen als praktikabel erwiesen, das Alk-1-en in reiner Form zum gelösten Metallocenkomplex (I) zu geben.

Als geeignete metalloceniumionenbildende Verbindungen (II), nachfolgend auch als Aktivatoren oder Aktivatorverbindungen bezeichnet, kommen in Schritt b) starke, neutrale Lewissäuren, ionische Verbindungen mit lewissauren Kationen oder ionische Verbindungem mit Brönsted-Säuren als Kation in Betracht.

Als starke, neutrale Lewissäuren sind Verbindungen der allgemeinen Formel (III)

M³X¹X²X³ (III)

bevorzugt, in der
- M³: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, beide mit jeweils 1 bis 10 C-Atomen im Alkylrest und 6 bis 20 C-Atome im Arylrest, Halogen-C₁- bis C₁₀-alkyl, Halogen-C₆- bis C₁₅-aryl oder Fluor, Chlor, Brom oder Jod stehen, insbesondere für Halogenaryle, vorzugsweise für Pentafluorphenyl.

Besonders bevorzugt sind Verbindungen der allgemeinen Formel (III), in der X¹, X² und X³ gleich sind, vorzugsweise Tris(pentafluorphenyl)boran.

Als ionische Verbindungen mit lewissauren Kationen sind Verbindungen der allgemeinen Formel (IV)

[(G^{a+})Q₁Q₂...Q_{z}]^{d+} (IV)

geeignet, in denen
- G: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, beide mit jeweils 6 bis 20 C-Atomen im Aryl- und 1 bis 28 C-Atome im Alkylrest, Halogen-C₁- bis C₂₈-alkyl oder Halogen-C₆- bis C₁₅-aryl, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyloder Mercaptylgruppen stehen
- a: für ganze Zahlen von 1 bis 6 steht,
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und ebenfalls nicht koordinierenden Gegenionen sind in der WO 91/09882 genannt, bevorzugtes Kation ist das N,N-Dimethylanilinium-Kation.

Durch die Umsetzung der Mischung nach Reaktionsschritt a) mit einer Aktivatorverbindung (II) gemäß Schritt b) erhält man eine kationisch aktivierte Metallocenverbindung, die in aliphatischen Lösungsmitteln bzw. in Lösungsmittelsystemen mit im wesentlichen aliphatischem Anteil gut löslich ist. Vorteilhafterweise gibt man die gemäß Schritt a) erhaltene Mischung langsam, d.h. in kontrollierter Weise, gegebenfalls tropfenweise, zur Aktivatorverbindung, wobei letztere vorzugsweise in Form einer separat hergestellten Suspension oder LÖsung vorliegt. Geeignete Suspensionsmedien sind inerte aromatische Flüssigkeiten, zum Beispiel ) Benzol, Toluol oder Xylol.

Die Umsetzung mit der metalloceniumionenbildenden Verbindung (II) in Schritt b) wird im allgemeinen bei Temperaturen zwischen -50 und 150°C, vorzugsweise bei 30 bis 100°C durchgeführt.

Nach der Aktivierung des Metallocenkomplexes in Schritt b) wird die Reaktionsmischung mit einem inertem unpolaren, im wesentlichen oder ausschließlich aliphatischen Lösungsmittel verdünnt (Schritt c)). Vorteilhafterweise setzt man hiervon mindestens 2, besonders bevorzugt mindestens 5 und insbesondere mindestens 10 Volumenteile, bezogen auf die gemäß den Schritten a) und b) erhaltene Mischung, ein. Als aliphatische Lösungsmittel kommen reine Kohlenwasserstoffe sowie Kohlenwasserstoffgemische in Betracht. Geeignet sind beispielsweise Pentan, Hexan, Heptan, Octan, Nonan, Decan, Dodecan und Isododecan, wobei geradkettige wie verzweigte Isomere sowie deren Mischungen eingesetzt werden können. Besonders häufig wird auf Isododecan zurückgegriffen. Für die erfindungsgemäße Katalysatorzubereitung ist es unschädlich, wenn das inerte unpolare aliphatische Lösungsmittel geringfügige Restmengen an inerter polarer, aromatischer Lösungsmittelkomponente wie Toluol, Ethylbenzol, Xylol, Dichlormethan oder Chloroform aufweist. Das Vermischen bzw. Verdünnen des Schrittes c) kann in Verbindung mit der folgenden Polymerisationsreaktion erfolgen, also z. B. indem die Reaktionsmischung nach Schritt b) in ein Polymerisationsgefäß eingebracht wird und dort entsprechend verdünnt wird. Dabei kann die Verdünnung vor Zugabe des zu polymerisierenden Alk-1-ens erfolgen, es kann jedoch auch eine Alk-1-en/Lösungsmittelmischung vorgelegt werden, so daß die Polymerisation gleichzeitig mit der Verdünnung des Reaktionsgemisches aus Schritt b) beginnen kann. Es ist gleichfalls möglich und aus praktischen Gründen oft vorteilhaft, die Verdünnung des Reaktionsgemisches aus Schritt b) zuerst nur mit der oben beschriebenen Menge eines aliphatischen Lösungsmittels durchzuführen. Auf diese Weise erhält man eine lagerfähige, aktive Katalysatorzubereitung, die im wesentlichen ein aliphatisches Lösungsmittel aufweist und die zu einem späteren Zeitpunkt in üblicher Weise für Polymerisationsreaktionen oder für die Aufbringung auf ein geeignetes Trägermaterial verwendet werden kann. Die in Schritt c) erhaltenen erfindungsgemäßen Katalysatorzubereitungen liegen im allgemeinen in Form einer Lösung vor.

Um die Vorteile der. erfindungsgemäßen Katalysatorzubereitung in vollem Umfang zur Geltung zu bringen, vermischt man das Reaktionsgemisch aus Schritt b) bis zum Einsatz im späteren Polymerisationsprozeß vorteilhafterweise mit mindestens 10 Volumenteilen eines aliphatischen Kohlenwasserstoffs. Ein noch größeres Verdünnungsvolumen kann aus prozeßtechnischen Gründen vorteilhaft sein. Gute Ergebnisse werden in jedem Fall durch Verdünnung mit 10 bis 1000, vorzugsweise mit 10 bis 100 Volumenteilen erzielt. Unter Kohlenwasserstoffe sollen in diesem Zusammenhang auch Gemische verschiedener Kohlenwasserstoffe verstanden werden.

Die Metallocenverbindung (I) kann auf verschiedene, dem Fachmann geläufige Art und Weise hergestellt werden. Eine vorteilhafte Synthese geht von Metallocenverbindungen der allgemeinen Formel (V) aus. Besonders vorteilhalft ist es, wenn die Umsetzung zur Erzeugung der Metallocenverbindung (I) in-situ durch Umsetzung einer Metallocenverbindung der allgemeinen Formel (V) 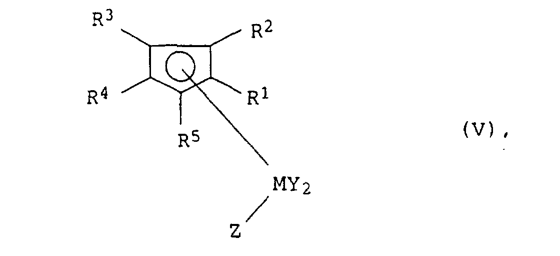 in der R¹, R², R³, R⁴, R⁵, M und Z die oben genannte Bedeutung haben und
- Y: unabhängig voneinander Fluor, Chlor, Brom oder Jod
bedeutet, mit einer Metallverbindung der allgemeinen Formel VI

M⁴(T¹)ₒ(T²)ₚ(T³)_{q} (VI),

in der
- M4: ein Metall der I., II. oder III. Hauptgruppe des Periodensystems, d.h. Bor, Aluminium, Gallium, Indium oder Thallium, insbesondere Aluminium bedeutet,
- T¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- T² und T³: Wasserstoff, Halogen, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest oder Alkoxy,
- o: eine ganze Zahl von 1 bis 3
und
- p und q: ganze Zahlen von 0 bis 2 bedeuten, wobei die Summe o+p+q der Wertigkeit von M⁴ entspricht,
vorgenommen wird.

Bevorzugt sind diejenigen Verbindungen (VI), in denen
- M⁴: Lithium, Magnesium oder Aluminium bedeutet und
- T¹ bis T³: für C₁- bis C₁₀-Alkyl stehen.

Besonders bevorzugte Metallverbindungen der allgemeinen Formel VI sind n-Butyllithium, n-Butyl-n-octylmagnesium, n-Butyl-n-heptylmagnesium, Tri-n-hexylaluminium sowie insbesondere Triisobutylaluminium. Unter den genannten Metallverbindungen (VI) wird bevorzugt auf Aluminiumalkyle zurückgegriffen.

Die Bedingungen für die Umsetzung sind an sich unkritisch. Temperaturen, Reaktionszeiten und Drücke richten sich nach dem Zeitpunkt der Umsetzung.

Als besonders zweckmäßig hat sich erwiesen, die entstehende Mischung ohne Aufreinigung direkt weiter gemäß den Schritten a) bis c) oder gegebenenfalls d) umzusetzen. D.h. die entstehende Mischung wird in Schritt a) direkt mit dem Alk-1-en umgesetzt. Geeigneterweise liegt die Metallocenverbindung (V) in einem inerten aromatischen Lösungsmittel oder in einem halogenierten Kohlenwasserstoff vor. Als Lösungsmittel kommen z.B. mäßig polare Flüssigkeiten in Betracht, wie sie auch für den beschriebenen Umsetzungsschritt a) verwendet werden, also u.a. Toluol oder Xylol. Es können auch Lösungsmittelgemische eingesetzt werden. Die Metallverbindung (VI) wird ebenfalls in der Regel gelöst in einem inerten Lösungsmittel mit der Metallocenverbindung (V) zur Reaktion gebracht. Häufig wird hierfür auf geradkettige oder verzweigte aliphatische Kohlenwasserstoffe wie Hexan oder Heptan zurückgegriffen.

Die erfindungsgemäße Katalysatorzubereitung läßt sich in allen üblichen Polymerisationsverfahren zur Polymerisation oder Copolymerisation von C₂- bis C₂₀-Alk-1-enen, gegebenenfalls auch mit anderen vinylischen Monomeren, einsetzen. Besonders zur Geltung kommen die Vorteile der erfindungsgemäßen Katalysatorzubereitung jedoch bei Verfahren zur Polymerisation von C₂- bis C₂₀-Alk-1-enen in Gegenwart einer in Form einer Lösung vorliegenden Katalysatorzubereitung, bei welchen man die Polymerisation in Lösung durchführt.

Als Lösungsmittel kommen dabei sowohl reine Kohlenwasserstoffe als auch Kohlenwasserstoffgemische in Betracht. Zu nennen sind beispielsweise Hexan, Heptan, Octan, Nonan, Decan, Dodecan und Isododecan, wobei geradkettige wie verzweigte Isomere sowie deren Mischungen eingesetzt werden können.

Die erfindungsgemäße Katalysatorzubereitung läßt sich besonders vorteilhaft in Lösungspolymerisationen, z. B. in Autoklavenverfahren, unter Normaldruckbedingungen oder in Hochdruckverfahren einsetzen, wobei letztere vorzugsweise in Rohrreaktoren durchgeführt werden.

Die Lösungspolymerisation unter Normaldruck wird bevorzugt bei Temperaturen im Bereich von -100 bis 200°C, insbesondere von 30 bis 80°C durchgeführt. Die Polymerisationsdauer liegt üblicherweise im Bereich von 1 min bis 12 h; es werden auch bereits mit Reaktionszeiten von weniger als 20 Minuten zufriedenstellende Resultate erzielt. Die Polymerisation kann durch Zugabe von protonenaktiven Verbindungen wie mineralischen oder organischen Säuren, Alkoholen oder Wasser sowie Gemischen der genannten Verbindungen abgebrochen werden. Als organische Säuren sind z.B. Essigsäure oder Benzoesäure geeignet, als Alkohole kommen u.a. Methanol, Ethanol oder i-Propanol in Betracht.

Die Katalysatorproduktivität liegt bei der Lösungsmittelpolymerisation regelmäßig oberhalb von 0,80 kg Polymer/g Metallocenkomplex (I).

Bevorzugt sind Verfahren zur Polymerisation von Alk-1-enen, bei denen man die Polymerisation bei Temperaturen zwischen 160 und 350°C und Drücken zwischen 500 und 3500 bar durchführt. Besonders bevorzugte Temperaturen für diese Verfahren liegen zwischen 180 und 280°C, besonders bevorzugte Drücke zwischen 1000 und 3000 bar. Weitere Details zur Durchführung derartiger Polymerisationen in Hochdruckreaktoren werden z. B. in "Ullmann's Encyklopädie der technischen Chemie", Verlag Chemie, Weinheim, Band 19, (1980), Seiten 169 bis 195, beschrieben.

Die erzielten Katalysatorproduktivitäten liegen im allgemeinen oberhalb von 155 kg Polymer/g Metallocenkomplex (I) für die Homound Copolymerisation. Die erhöhte Aktivität der erfindungsgemäßen Katalysatorzubereitungen läßt sich auch anhand des Temperaturanstiegs am Beginn des Rohrreaktors ablesen. Über den Anfangsbereich des Rohrreaktorsystems läßt sich ein Temperaturanstieg/m von 5°C und darüber beobachten.

Nach den erfindungsgemäßen Polymerisationsverfahren lassen sich verschiedenste C₂- bis C₂₀-Alk-1-ene polymerisieren oder copolymerisieren, wobei unter Polymerisation bzw. Copolymerisation hier sowohl Homopolymerisationen als auch Copolymerisationen unterschiedlicher Alk-1-ene oder von Alk-1-enen mit anderen vinylischen Comonomeren, wie etwa Styrol, verstanden werden sollen: Besonders geeignet ist die erfindungsgemäße Katalysatorzubereitung in Verfahren zur Homopolymerisation von C₂- bis C₆-Alk-1-enen, insbesondere zur Polymerisation von Ethen oder Propen, vorzugsweise Ethen, sowie zur Copolymerisation von C₂- bis C₈-Alk-1-enen. Vorzugsweise wird Ethen mit C₃- bis C₂₀-Alk-1-enen, insbesondere C₃- bis C₈-Alk-1-enen copolymerisiert. Ethen wird in der Regel als Hauptkomponente in diese Copolymere eingebaut. Es können sowohl binäre als auch höhere Copolymersysteme mit dem erfindungsgemäßen Verfahren erhalten werden.

Die erfindungsgemäßen Katalysatorzubereitungen lassen sich auch für die Herstellung geträgerter Katalysatorsysteme verwenden. Als Trägermaterialien kommen partikuläre Trägermaterialien in Frage. Exemplarisch seien als organische Trägermaterialien Polyolefine wie Polyethylen, Polypropylen, Poly-1-buten und Polymethyl-1-penten und Copolymere mit den diesen Polymeren zugrundeliegenden Monomeren, weiterhin Polyester, Polyamide, Polyvinylchlorid, Polyacrylate und -methacrylate und Polystyrol genannt. Bevorzugt sind jedoch anorganische Trägermaterialien wie poröse Oxide, z.B. SiO₂, Al₂O₃, MgO, ZrO₂, TiO₂, B₂O₃, CaO, ZnO. Auch Metallhalogenide wie MgCl₂ kommen als Träger in Betracht. Es können auch beliebige Mischungen der vorgenannten anorganischen Trägermaterialien eingesetzt werden. Die Trägermaterialien weisen vorzugsweise einen Teilchendurchmesser zwischen 1 und 300 µm auf, insbesondere von 30 bis 70 µm. Besonders bevorzugte Träger sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Es hat sich als vorteilhaft erwiesen, die Alumosilikate bzw. Silikate vor der eigentlichen Trägerung bei Temperaturen im Bereich von 140 bis 200°C und einem Unterdruck von etwa 1 mbar von physisorbiertem Wasser zu befreien. Dieser Prozeß ist im allgemeinen auch unter dem Begriff Calcinieren bekannt.

Das Trägermaterial wird üblicherweise unter Rühren zur erfindungsgemäßen Katalysatorzubereitung gegeben. Nach einer Verweilzeit, die im Bereich von wenigen Minuten bis zu mehreren Stunden liegen kann, wird die flüssige Phase vorteilhafterweise im Vakuum entfernt. Man erhält aber auch bereits dann einen polymerisationsaktiven geträgerten Katalysator, wenn die flüssige Phase unmittelbar nach Zugabe des Trägermaterials der Suspension unter Rühren entzogen wird. Die beschriebenen geträgerten Katalysatorsysteme können für die Homo- und Copolymerisation von Alk-1-enen eingesetzt werden.

Die Verwendung der erfindungsgemäßen Katalysatorzubereitung zur Polymerisation von Alk-1-enen weist verschiedene Vorteile auf: durch die Löslichkeit und Mischbarkeit mit aliphatischen Lösungsmitteln kann auf die Anwesenheit größerer Mengen aromatischer oder halogenierter Lösungsmittel verzichtet werden. Der Katalysatorkomplex ist dadurch stabiler und langlebiger. Es werden weniger Abbruchreaktionen und damit deutlich geringere Anteile wachsartiger Polymerer in den Polymerisaten beobachtet. Die erhaltenen Polymerisate zeichnen sich daher durch besonders gute Homogenität aus. Außerdem zeigen die erfindungsgemäßen Katalysatorzubereitungen bessere Produktivitäten als entsprechende Katalysatorzubereitungen auf Toluolbasis. Besondere Vorteile ergeben sich aufgrund der verbesserten Löslichkeit der erfindungsgemäßen Katalysatorzubereitung vor allem auch unter den Reaktionsbedingungen der Hochdruckpolymerisation, wo insbesondere bei kontinuierlicher Prozeßführung eine verringerte Fehlerquote beobachtet wird.

Die nachfolgenden Beispiele verdeutlichen die Vorteile der Erfindung:

### Beispiele:

### A. Herstellung der erfindungsgemäßen Katalysatorzubereitung:

### Beispiel 1

Zu einer Lösung von Bis(n-butylcyclopentadienyl)zirkoniumdichlorid (nachfolgend bis(n-BuCp)ZrCl₂) (20 mmol) in 2 l Toluol wurden 200 mmol Triisobutylaluminium (TIBA) (2 M Lösung in Heptan) gegeben und 1 h bei Raumtemperatur gerührt. Zu dieser Lösung gab man 1-Octen (1 mol) und rührte weitere 15 min (Mischung A). Separat wurde N,N-Dimethylaniliniumtetrakis(pentafluorophenyl)-borat (24 mmol) in 1 l Toluol suspendiert (Mischung B).

Danach wurde die Mischung A langsam zur Mischung B zudosiert und 15 min gerührt. Die entstandene Lösung wurde mit 47 l Isododecan verdünnt. Man erhielt eine klare Katalysatorlösung (K-1), die direkt für Polymerisationsversuche verwendet werden konnte.

### Beispiel 2

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt. Zu dieser Lösung gab man 1-Octen (1,5 mol) und rührte weitere 15 min (Mischung A). Separat wurde N,N-Dimethylaniliniumtetrakis(pentafluorophenyl)-borat (24 mmol) in 1 l Toluol suspendiert (Mischung B).

Danach wurde die Mischung A langsam zur Mischung B zudosiert und 15 min gerührt. Die entstandene Lösung wurde mit 47 l Isododecan verdünnt. Man erhielt eine klare Katalysatorlösung (K-2), die direkt für Polymerisationsversuche verwendet werden konnte.

### Beispiel 3

Zu einer Lösung von bis(n-BuCp)ZrCl₂ (20 mmol) in 2 l Toluol wurden 200 mmol Triisobutylaluminium. (TIBA) (2 M Lösung in Heptan) gegeben und 1 h bei Raumtemperatur gerührt. Zu dieser Lösung gab man 1-Octen (2 mol) und rührte weitere 15 min (Mischung A). Separat wurde N,N-Dimethylaniliniumtetrakis(pentafluorophenyl)-borat (24 mmol) in 1 l Toluol suspendiert (Mischung B).

Danach wurde die Mischung A langsam zur Mischung B zudosiert und 15 min gerührt. Die entstandene Lösung wurde mit 47 l Isododecan verdünnt. Man erhielt eine klare Katalysatorlösung (K-3), die direkt für Polymerisationsversuche verwendet werden konnte.

### Beispiel 4

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt. Zu dieser Lösung gab man 1-Octen (1,5 mol) und rührte weitere 15 min (Mischung A). Separat wurde N,N-Dimethylaniliniumtetrakis(pentafluorophenyl)-borat (24 mmol) in 1 l Toluol suspendiert (Mischung B).

Danach wurde die Mischung A langsam zur Mischung B zudosiert und 3 h gerührt. Die entstandene Lösung wurde mit 47 l Isododecan verdünnt. Man erhielt eine klare Katalysatorlösung (K-4), die direkt für Polymerisationsversuche verwendet werden konnte.

### Beispiel 5

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt. Zu dieser Lösung gab man 1-Octen (20 mmol) und rührte weitere 15 min (Mischung A). Separat wurde N,N-Dimethylaniliniumtetrakis(pentafluorophenyl)-borat (24 mmol) in 1 l Toluol suspendiert (Mischung B).

Danach wurde die Mischung A langsam zur Mischung B zudosiert und 15 min gerührt. Die entstandene Lösung wurde mit 47 l Isododecan verdünnt. Man erhielt eine klare Katalysatorlösung (K-5), die direkt für Polymerisationsversuche verwendet werden konnte.

### Beispiel 6

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt. Zu dieser Lösung gab man 1-Octen (20 mol) und rührte weitere 15 min (Mischung A). Separat wurde N,N-Dimethylaniliniumtetrakis(pentafluorophenyl)-borat (24 mmol) in 1 l Toluol suspendiert (Mischung B).

Danach wurde die Mischung A langsam zur Mischung B zudosiert und 15 min gerührt. Die entstandene Lösung wurde mit 47 l Isododecan verdünnt. Man erhielt eine klare Katalysatorlösung (K-6), die direkt für Polymerisationsversuche verwendet werden konnte.

### B. Herstellung nicht erfindungsgemäßer Vergleichskatalystorzubereitungen:

### Beispiel V-1

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 15 min bei Raumtemperatur gerührt. Die entstandene Suspension wurde mit 48 l Toluol verdünnt. Die gebildete Katalysatorzubereitung (K-V1) wurde in der Polymerisation eingesetzt.

### Beispiel V-2

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 3 h bei Raumtemperatur gerührt. Die entstandene Lösung wurde mit 48 l Toluol verdünnt. Die gebildete Katalysatorzubereitung (K-V2) wurde in der Polymerisation eingesetzt.

### Beispiel V-3

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 3 h bei Raumtemperatur gerührt. Die entstandene Lösung wurde mit 48 l Isodekan verdünnt, der gebildete Niederschlag durch Dekantierung getrennt und die erhaltene Lösung (K-V3) in der Polymerisation eingesetzt.

### Beispiel V-4

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 15 min bei Raumtemperatur gerührt. Zu dieser Lösung gab man 40 mmol 1-Octen und rührte weitere 15 min. Die entstandene Lösung wurde mit 2 l Isododecan verdünnt, der gebildete Niederschlag durch Dekantierung getrennt und der Überstand mit 46 l Isododecan verdünnt. Die erhaltene Katalysatorzubereitung (K-V4) wurde in der Polymerisation eingesetzt.

### Beispiel V-5

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 3 h bei Raumtemperatur gerührt. Zu dieser Lösung gab man 40 mmol 1-Octen und rührte weitere 15 min. Die entstandene Lösung wurde mit 2 l Isododecan verdünnt, der gebildete Niederschlag durch Dekantierung getrennt und der Überstand mit 46 l Isododecan verdünnt. Die erhaltene Katalysatorzubereitung (K-V5) wurde in der Polymerisation eingesetzt.

### Beispiel V-6

Zu einer Lösung von bis(n-BuCp)ZrCl₂ (20 mmol) in 2 l Isododekan wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 3 h bei Raumtemperatur gerührt. Zu dieser Mischung gab man 40 mmol 1-Octen und rührte weitere 15 min. Die entstandene Lösung wurde mit 2 l Isododecan verdünnt, der gebildete Niederschlag durch Dekantierung getrennt und der Überstand mit 46 l Isododecan verdünnt. Die erhaltene Katalysatorzubereitung (K-V6) wurde in der Polymerisation eingesetzt.

### Beispiel V-7

Zu einer Lösung von bis(n-BuCp)ZrCl₂ (20 mmol) in 2 l Toluol wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 3 h bei Raumtemperatur gerührt. Zu dieser Mischung gab man 40 mmol 1-Octen und rührte weitere 15 min. Die entstandene Mischung wurde mit 2 l 1-Octen verdünnt, der gebildete Niederschlag durch Dekantierung getrennt und der Überstand mit 46 l 1-Octen verdünnt.Die Lösung war instabil. Bereits nach kurzer Zeit bildete sich ein Niederschlag (Niederschlaganalyse s. Tabelle, Bsp. V-17).

### Beispiel V-8

Zu einer Lösung von bis(n-BuCp)ZrCl₂ (20 mmol) in 2 l 1-Octen wurden 200 mmol Triisobutylaluminium (TIBA) (2 M Lösung in Heptan) gegeben und 1 h bei Raumtemperatur gerührt.

Danach wurden 24 mmol N,N-dimethylanilinium-tetrakis(pentafluorophenyl)-borat zugegeben und 3 h bei Raumtemperatur gerührt. Die Mischung wurde mit 48 l 1-Octen verdünnt. Die erhaltene Katalysatorzubereitung (K-V8) wurde in der Polymerisation eingesetzt.

### C. Polymerisationsversuche

### Allgemeine Versuchsbedingungen

### Lösungspolymerisation (diskontinuierlich)

Zu wasserfreiem Toluol (120 ml) gab man die Katalysatorzubereitung mit einem Gehalt von 2,5 mmol an Katalysatorkomplex und leitete Ethylen mit einem Durchsatz von 40 l/h drucklos durch das Reaktionsmedium. Die Lösung wurde bei 50°C thermostatisiert. Die Polymerisation wurde durch Zugabe eines Salzsäure/Methanol-Gemisches abgebrochen, das gebildete Polymer abfiltriert, mit Toluol und Methanol gewaschen und 6 h bei 90°C getrocknet. Polymerisationsergebnisse und -bedingungen sind in der nachfolgenden Tabelle zusammengefaßt.

### Polymerisation im Hochdruckrohrreaktor (kontinuierlich)

In einem Hochdruckrohrreaktor mit einem L/D-Verhältnis von 1333 wurden bei 210 bzw. 230°C und 1700 bar Polymerisationen durchgeführt. Die Katalysatorzubereitung wurde am Anfang des Reaktors in einer Konzentration von 7,59 x 10⁻² mmol (nicht erfindungsgemäße Vergleichsversuche) bzw. 6,1 x 10⁻² mmol Katalysatorkomplex/mol Alk-1-en (erfindungsgemäße Versuche) zudosiert. In den Beispielen 7 bis 14 wurde nur Ethylen eingespeist, in Beispiel 15 wurde als Comonomer 1-Hexen in einem molaren Comonomerverhältnis Ethylen/Hexen von 56 zudosiert. In Beispiel 14 wurde Wasserstoff als Regler eingesetzt.

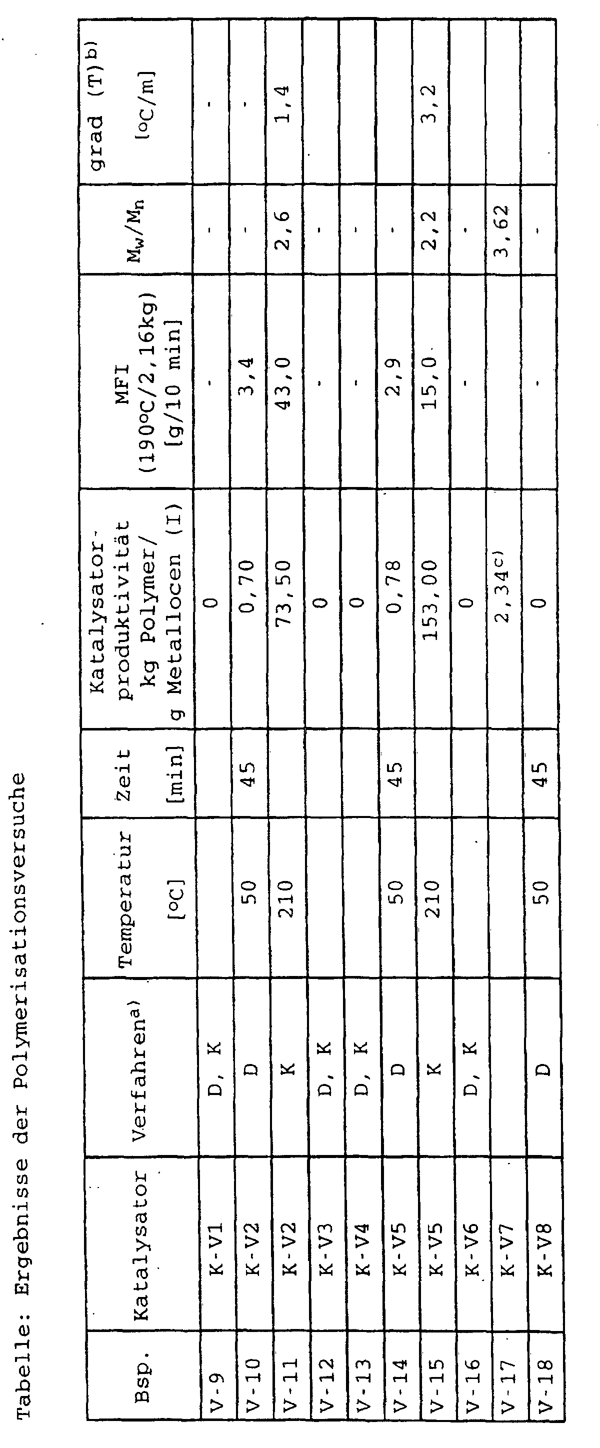

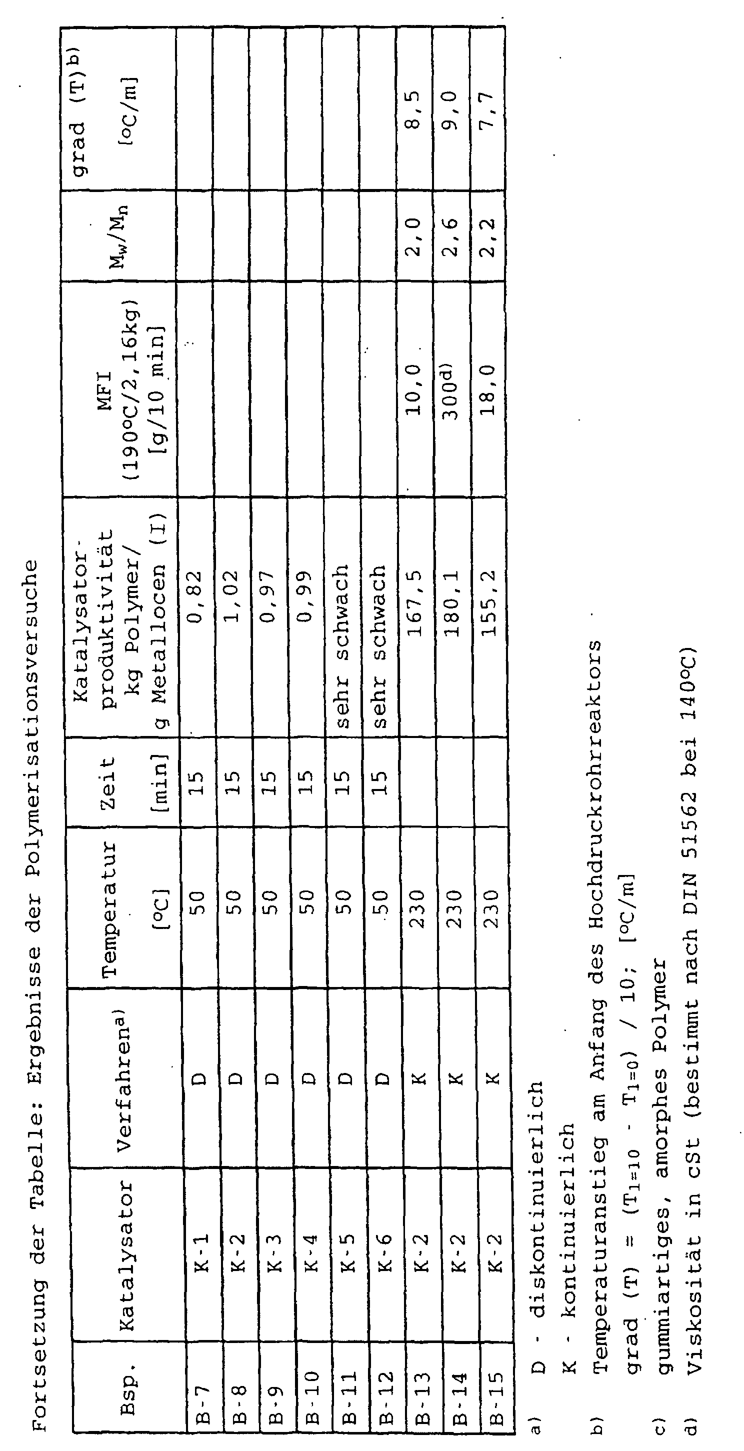

## Patentansprüche

1. Für die (Co)polymerisation von Alk-1-enen geeignete Katalysatorzubereitung, erhältlich durch
a) Mischen eines Metallocenkomplexes der allgemeinen Formel (I) 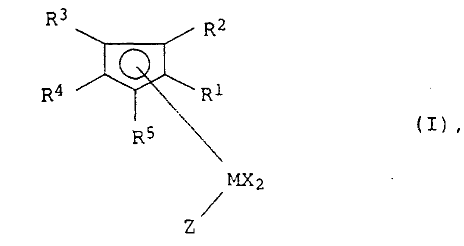 in der die Substituenten folgende Bedeutung haben:
M Titan, Zirkonium, Hafnium, Vanadium, Niob oder Tantal
X Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
wobei
R⁶ und R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls.auch zwei benachbarte Reste gemeinsam für 4 bis 15 C-Atome aufweisende, gesättigte oder ungesättigte cyclische Gruppen stehen können, oder Si(R⁸)₃ mit
R⁸ C₁- bis C₁₀-Alkyl, C₃- bis C₁₀-Cycloalkyl oder C₆- bis C₁₅-Aryl,
Z für X oder 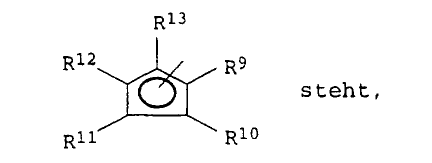
wobei die Reste
R⁹ bis R¹³ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende, gesättigte oder ungesättigte cyclische Gruppen stehen können, oder Si(R¹⁴)₃ mit
R¹⁴ C₁- bis C₁₀-Alkyl, C₆- bis C₁₅-Aryl oder C₃bis C₁₀-Cycloalkyl,
oder wobei die Reste R⁴ und Z gemeinsam eine Gruppierung -R¹⁵-A- bilden, in der
R¹⁵ 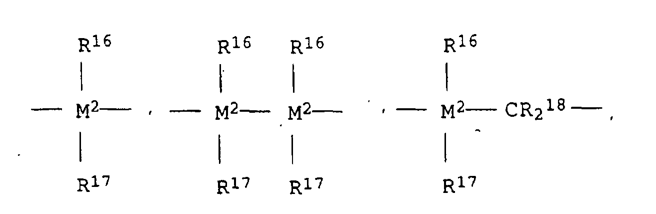 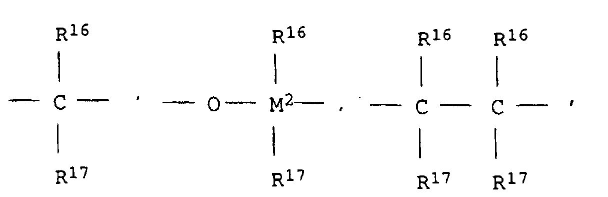 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und R¹⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
A ―O―, ―S―, 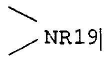 oder 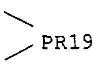 bedeuten, mit
R¹⁹ C₁- bis C₁₀-Alkyl, C₆- bis C₁₅-Aryl, C₃bis C₁₀-Cycloalkyl, Alkylaryl oder Si(R²⁰)₃,
R²⁰ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵- bilden,
mit einem C₃- bis C₂₀-Alk-1-en in einem inerten Lösungsmittel, wobei das molare Verhältnis von Metallocenkomplex zu Alk-1-en im Bereich von 1:0,1 bis 1:100 liegt,
b) kontrollierte Umsetzung der Mischung nach a) mit einer metalloceniumionenbildenden Verbindung (II) und
c) Verdünnen der Mischung nach b) mit einem inerten unpolaren, im wesentlichen aliphatischen Lösungsmittel sowie gegebenenfalls
d) Aufbringen der Katalysatorzubereitung nach c) auf ein partikuläres Trägermaterial.

2. Katalysatorzubereitung nach Anspruch 1, **dadurch gekennzeichnet, daß** man in Schritt a) als inertes Lösungsmittel aromatische oder halogenierte Kohlenwasserstoffe verwendet.

3. Katalysatorzubereitung nach den Ansprüchen 1 bis 2, **dadurch gekennzeichnet, daß** man die Mischung gemäß a) langsam zu einer Lösung oder Suspension der metalloceniumionenbildenden Verbindung (II) gibt.

4. Katalysatorzubereitung nach den Ansprüchen 1 bis 3, **dadurch gekennzeichnet, daß** man die Metallocenverbindung (I) in-situ durch Umsetzung einer Metallocenverbindung der allgemeinen Formel (V) 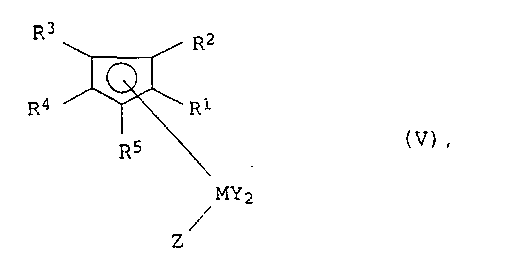 in der die Substituenten folgende Bedeutung haben:
M Titan, Zirkonium, Hafnium, Vanadium, Niob oder Tantal
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende, gesättigte oder ungesättigte cyclische Gruppen stehen können, oder Si(R⁸)₃ mit
R⁸ C₁- bis C₁₀-Alkyl, C₃- bis C₁₀-Cycloalkyl oder C6- bis C₁₅-Aryl,
Z für X oder 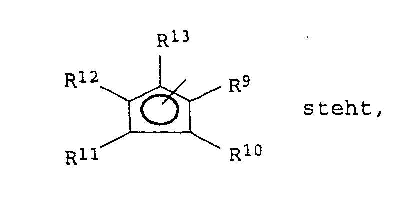
wobei die Reste
R⁹ bis R¹³ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C Atome aufweisende, gesättigte oder ungesättigte cyclische Gruppen stehen können, oder Si(R¹⁴)₃ mit
R¹⁴ C₁- bis C₁₀-Alkyl, C₆- bis C₁₅-Aryl oder C₃bis C₁₀-Cycloalkyl,
oder wobei die Reste R⁴ und Z gemeinsam eine Gruppierung - R¹⁵-A- bilden, in der
R¹⁵ 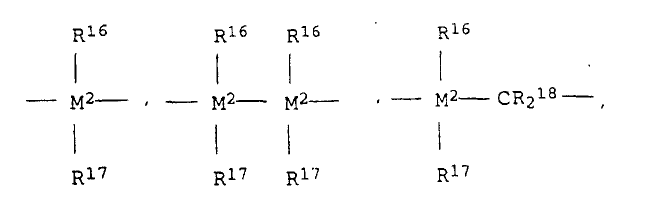 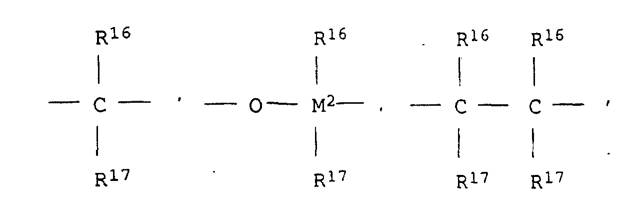 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und und R¹⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
A ―O―, ―S―, 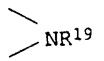 oder 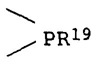 bedeuten, mit
R¹⁹ C₁- bis C₁₀-Alkyl, C₆- bis C₁₅-Aryl, C₃- bis C₁₀-Cycloalkyl, Alkylaryl oder Si(R²⁰)₃,
R²⁰ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung - R¹⁵- bilden, und
Y Fluor, Chlor, Brom oder Jod
mit einer Metallverbindung der allgemeinen Formel VI
M⁴(T¹)ₒ(T²)ₚ(T³)_{q} (VI),
in der
M⁴ ein Metall der I., II. oder III. Hauptgruppe des Periodensystems bedeutet,
T¹ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
T² und T³ Wasserstoff, Halogen, C₁- bis C₁₀-Alkyl, C₆bis C₁₅-Aryl, Alkylaryl oder Arylalkyl mit jeweils 1 bis 10 C-Atomen im Alkylrest und 6 bis 20 C-Atomen im Arylrest oder Alkoxy,
o eine ganze Zahl von 1 bis 3 und
p und q ganze Zahlen von 0 bis 2 bedeuten, wobei die Summe o+p+q der Wertigkeit von M⁴ entspricht,
erzeugt und die erhaltene Mischung ohne Aufreinigung weiter gemäß den Schritten a) bis c) oder gegebenenfalls d) umsetzt.

5. Katalysatorzubereitung nach den Ansprüchen 1 bis 4, **dadurch gekennzeichnet, daß** man als metalloceniumionenbildende Verbindung (II) starke neutrale Lewissäuren, ionische Verbindungen mit lewissauren Kationen oder ionische Verbindungen mit Brönstedt-Säuren als Kation einsetzt.

6. Katalysatorzubereitung nach Anspruch 5, **dadurch gekennzeichnet, daß** man als metalloceniumionenbildende Verbindung (II) Tetrakispentafluorphenylborat verwendet.

7. Verfahren zur Herstellung einer für die (Co)polymerisation von Alk-1-enen geeigneten Katalysatorzubereitung, wobei die Verfahrensschritte den in Anspruch 1 genannten Schritten a) bis c) oder gegebenenfalls d) entsprechen.

8. Verfahren zur Herstellung von (Co)polymeren aus C₂- bis C₂₀-Alk-1-enen, **dadurch gekennzeichnet, daß** die (Co)polymerisation in Gegenwart einer Katalysatorzubereitung gemäß den Ansprüchen 1 bis 6 durchgeführt wird.

9. Verfahren nach Anspruch 8, **dadurch gekennzeichnet, daß** man die (Co)polymerisation in Lösung durchführt.

10. Verwendung einer Katalysatorzubereitung gemäß den Ansprüchen 1 bis 6 zur Polymerisation von C₂- bis C₂₀-Alk-1-enen.

## Claims

1. A catalyst composition suitable for the (co)polymerization of alk-1-enes, obtainable by
a) mixing a metallocene complex of the formula (I) 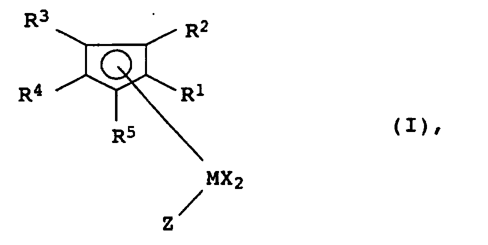 where the substituents have the following meanings:
M is titanium, zirconium, hafnium, vanadium, niobium or tantalum,
X is hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR⁶ or -NR⁶R⁷,
where
R⁶ and R⁷ are C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R¹ to R⁵ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a saturated or unsaturated cyclic group having from 4 to 15 carbon atoms, or Si(R⁸)₃ where
R⁸ is C₁-C₁₀-alkyl, C₃-C₁₀-cycloalkyl or C₆-C₁₅-aryl,
z is X or 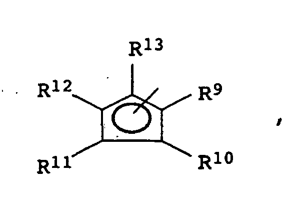
where the radicals
R⁹ to R¹³ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a saturated or unsaturated cyclic group having from 4 to 15 carbon atoms, or Si(R¹⁴)₃ where
R¹⁴ is C₁-C₁₀-alkyl, C₆-C₁₅-aryl or C₃-C₁₀-cycloalkyl,
or the radicals R⁴ and Z together form a -R15-A- group,
where
R¹⁵ is 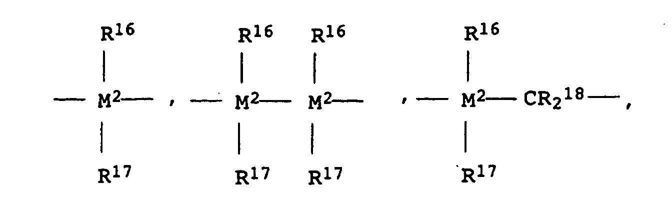 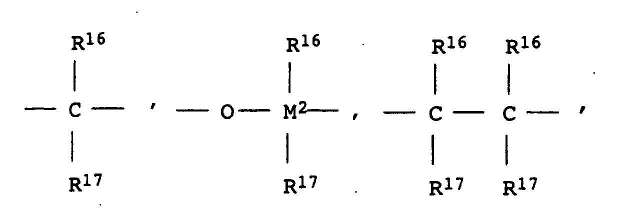 = BR¹⁶, = AlR¹⁶, -Ge-, -Sn-, -O-, -S-, = SO, = SO₂, = NR¹⁶, = CO, = PR¹⁶ or = P(O)R¹⁶,
where
R¹⁶, R¹⁷ and R¹⁸ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or two adjacent radicals together with the atoms connecting them form a ring, and
M² is silicon, germanium or tin,
A is ―O―, ―S― , 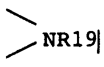 or 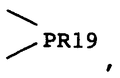 where
R¹⁹ is C₁-C₁₀-alkyl, C₆-C₁₅-aryl, C₃-C₁₀-cycloalkyl, alkylaryl or Si(R²⁰)₃,
R²⁰ is hydrogen, C₁-C₁₀-alkyl, C₆-C₁₅-aryl which may in turn bear C₁-C₄-alkyl groups as substituents, or C₃-C₁₀-cycloalkyl
or the radicals R⁴ and R¹² together form a -R¹⁵- group,
with a C₃-C₂₀-alk-1-ene in an inert solvent, where the molar ratio of metallocene complex to alk-1-ene is in the range from 1:0.1 to 1:100,
b) reacting the mixture obtained in a) in a controlled manner with a compound (II) capable of forming metallocenium ions and
c) diluting the mixture obtained in b) with an inert nonpolar, essentially aliphatic solvent and, if desired,
d) applying the catalyst composition obtained in c) to a particulate support material.

2. A catalyst composition as claimed in claim 1, wherein aromatic or halogenated hydrocarbons are used as inert solvent in step a).

3. A catalyst composition as claimed in claim 1 or 2, wherein the mixture obtained in a) is slowly added to a solution or suspension of the compound (II) capable of forming metallocenium ions.

4. A catalyst composition as claimed in any of claims 1 to 3, wherein the metallocene compound (I) is produced in situ by reacting a metallocene compound of the formula (V) 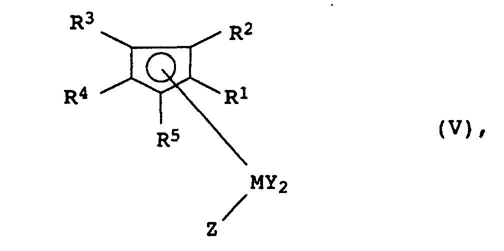 where the substituents have the following meanings:
M is titanium, zirconium, hafnium, vanadium, niobium or tantalum,
R¹ to R⁵ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a saturated or unsaturated cyclic group having from 4 to 15 carbon atoms, or Si(R⁸)₃ where
R⁸ is C₁-C₁₀-alkyl, C₃-C₁₀-cycloalkyl or C₆-C₁₅-aryl,
Z is X or 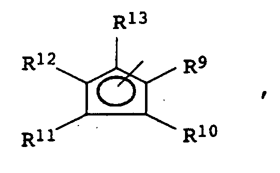
where the radicals
R⁹ to R¹³ are hydrogen, C₁-C₁₀-alkyl, 5- to 7-membered cycloalkyl which may in turn bear a C₁-C₁₀-alkyl as substituent, C₆-C₁₅-aryl or arylalkyl, where two adjacent radicals may also together form a saturated or unsaturated cyclic group having from 4 to 15 carbon atoms, or Si(R¹⁴)₃ where
R¹⁴ is C₁-C₁₀-alkyl, C₆-C₁₅-aryl or C₃-C₁₀-cycloalkyl,
or the radicals R⁴ and Z together form a -R¹⁵-A- group, where
R¹⁵ is 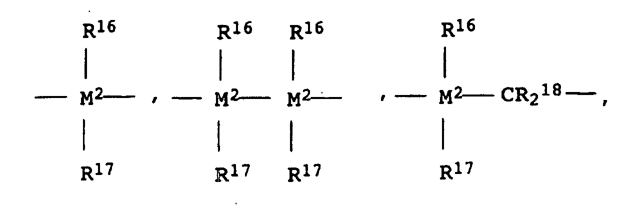 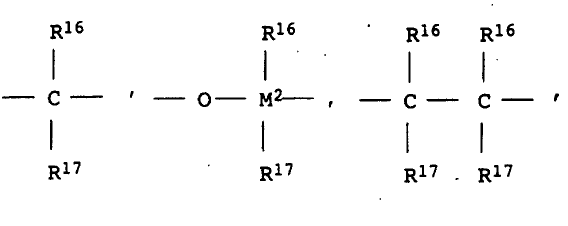 = BR¹⁶, = AlR¹⁶, -Ge-, -Sn-, -O-, -S-, = SO, = SO₂, = NR¹⁶, = CO, = PR¹⁶ or = P(O)R¹⁶,
where
R¹⁶, R¹⁷ and R¹⁸ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or two adjacent radicals together with the atoms connecting them form a ring, and
M² is silicon, germanium or tin,
A is ―O―, ―S―, 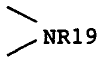 or 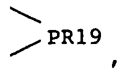 where
R¹⁹ is C₁-C₁₀-alkyl, C₆-C₁₅-aryl, C₃-C₁₀-cycloalkyl, alkylaryl or Si(R²⁰)₃,
R²⁰ is hydrogen, C₁-C₁₀-alkyl, C₆-C₁₅-Aryl which may in turn bear C₁-C₄-alkyl groups as substituents or C₃-C₁₀-cycloalkyl
or the radicals R⁴ and R¹² together form a -R¹⁵- group, and
Y is fluorine, chlorine, bromine or iodine
with a metal compound of the formula VI
M⁴(T¹)ₒ(T²)ₚ(T³)_{q} (VI),
where
M⁴ is a metal of main group I, II or III of the Periodic Table,
T¹ is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
T² and T³ are hydrogen, halogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical or alkoxy,
o is an integer from 1 to 3 and
p and q are integers from 0 to 2, where the sum o+p+q corresponds to the valence of M⁴,
and the mixture obtained is, without purification, reacted further as described in the steps a) to c) or, if desired, d).

5. A catalyst composition as claimed in any of claims 1 to 4, wherein the compound (II) capable of forming metallocenium ions is a strong uncharged Lewis acid, an ionic compound containing Lewis acid cations or an ionic compound containing Brönstedt acids as cation.

6. A catalyst composition as claimed in claim 5, wherein the compound (II) capable of forming metallocenium ions is tetrakispentafluorophenylborate.

7. A process for preparing a catalyst composition suitable for the (co)polymerization of alk-1-enes, wherein the process steps correspond to the steps a) to c) or, if desired, d) specified in claim 1.

8. A process for preparing (co)polymers of C₂-C₂₀-alk-1-enes, wherein the (co)polymerization is carried out in the presence of a catalyst composition as claimed in any of claims 1 to 6.

9. A process as claimed in claim 8, wherein the (co)polymerization is carried out in solution.

10. The use of a catalyst composition as claimed in any of claims 1 to 6 for the polymerization of C₂-C₂₀-alk-1-enes.

## Revendications

1. Préparation catalytique appropriée pour la (co)polymérisation d'alc-1-ènes, pouvant être obtenue par
a) mélange d'un complexe de métallocène de formule générale (I) 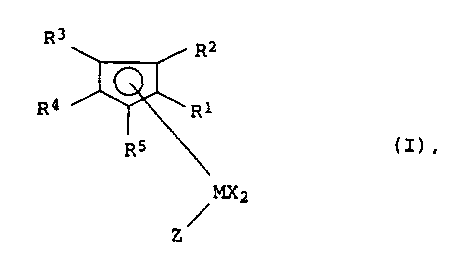 dans laquelle les substituants ont la signification suivante:
M titane, zirconium, vanadium, niobium ou tantale,
x hydrogène, alkyle en C₁ à C₁₀, aryle en C₆ à C₁₅, alkylaryle ayant 1 à 10 atomes de carbone dans le reste alkyle et 6 à 20 atomes de carbone dans le reste aryle, -OR⁶ ou -NR⁶R⁷,
tandis que
R⁶ et R⁷ désignent un groupe alkyle en C₁ à C₁₀, aryle en C₆ à C₁₅, alkylaryle, arylalkyle, fluoroalkyle ou fluoroaryle avec à chaque fois 1 à 10 atomes de carbone dans le reste alkyle et 6 à 20 atomes de carbone dans le reste aryle,
R¹ à R⁵ hydrogène, alkyle en C₁ à C₁₀, cycloalkyle à 5 à 7 chaînons, qui peut porter à son tour un alkyle en C₁ à C₁₀ comme substituant, aryle en C₆ à C₁₅ ou arylalkyle, tandis qu'éventuellement également deux restes voisins peuvent former ensemble des groupes cycliques saturés ou insaturés présentant 4 à 15 atomes de carbone, ou Si(R⁸)₃ avec
R⁸ alkyle en C₁ à C₁₀, cycloalkyle en C₃ à C₁₀ ou aryle en C₆ à C₁₅,
Z désigne X ou 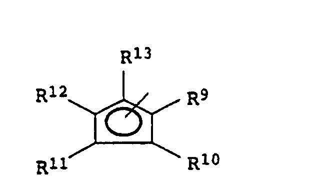
tandis que les restes
R⁹ à R¹³ désignent l'hydrogène ou un groupe alkyle en C₁ à C₁₀, cycloalkyle à 5 à 7 chaînons, qui peut à son tour porter un alkyle en C₁ à C₁₀ comme substituant, aryle en C₆ à C₁₅ ou arylalkyle, et tandis qu'éventuellement également deux restes voisins peuvent former ensemble des groupes cycliques saturés ou insaturés présentant 4 à 15 atomes de carbone, ou Si(R¹⁴)₃ avec
R¹⁴ alkyle en C₁ à C₁₀, aryle en C₆ à C₁₅ ou cycloalkyle en C₃ à C₁₀,
ou tandis que les restes R⁴ et Z forment ensemble un groupement -R¹⁵-A-, dans lequel
R¹⁵ est 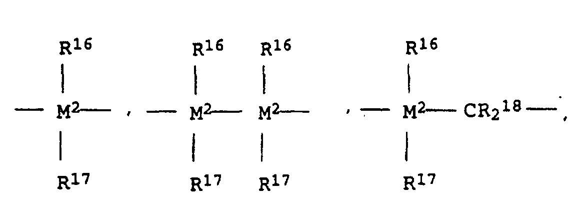 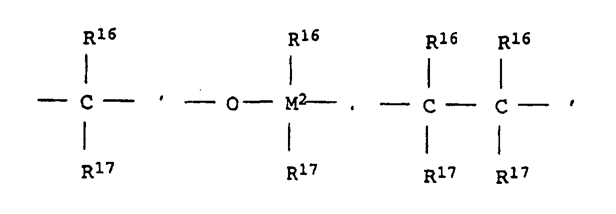 = BR¹⁶, = AlR¹⁶, -Ge-, -Sn-, -O-, -S-, = SO, = SO₂, = = NR¹⁶, = CO, = PR¹⁶ ou = P(O)R¹⁶,
tandis que
R¹⁶, R¹⁷ et R¹⁸ sont identiques ou différents et représentent un atome d'hydrogène, un atome d'halogène, un groupe alkyle en C₁ à C₁₀, un groupe fluoroalkyle en C₁ à C₁₀, un groupe fluoroaryle en C₆ à C₁₀, un groupe aryle en C₆ à C₁₀, un groupe alcoxy en C₁ à C₁₀, un groupe alcényle en C₃ à C₁₀, un groupe arylalkyle en C₈ à C₄₀ ou un groupe alkylaryle en C₇ à C₄₀, ou tandis que deux restes voisins forment à chaque fois un cycle avec les atomes de carbone les reliant, et
M² est le silicium, le germanium ou l'étain,
A représente ―O―, ―S―, 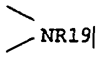 ou 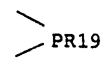
avec
R¹⁹ alkyle en C₁ à C₁₀, aryle en C₆ à C₁₅, cycloalkyle en C₃ à C₁₀, alkylaryle ou Si(R²⁰)₃,
R²⁰ hydrogène, alkyle en C₁ à C₁₀, aryle en C₆ à C₁₅, qui peut à son tour être substitué par des groupes alkyle en C₁ à C₄, ou cycloalkyle en C₃ à C₁₀,
ou tandis que les restes R⁴ et R¹² forment ensemble un groupement -R¹⁵-,
avec alc-1-ène en C₃ à C₂₀ dans un solvant inerte, tandis que le rapport molaire du complexe de métallocène à l'alc-1-ène se situe dans l'intervalle de 1:0,1 à 1:100,
b) réaction contrôlée du mélange selon a) avec un composé (II) formant des ions métallocénium, et
c) dilution du mélange selon b) avec un solvant essentiellement aliphatique, non-polaire, inerte, ainsi qu'éventuellement
d) dépôt de la préparation catalytique selon c) sur un matériau support particulaire.

2. Préparation catalytique selon la revendication 1, **caractérisée par le fait qu'**on utilise comme solvant inerte dans l'étape a) des hydrocarbures aromatiques ou halogénés.

3. Préparation catalytique selon les revendications 1 à 2, **caractérisée par le fait qu'**on ajoute le mélange selon a) lentement à une solution ou suspension du composé (II) formant des ions métallocénium.

4. Préparation catalytique selon les revendications 1 à 3, **caractérisée par le fait qu'**on prépare le composé de métallocène (I) in situ par réaction d'un composé de métallocène de formule générale (V) 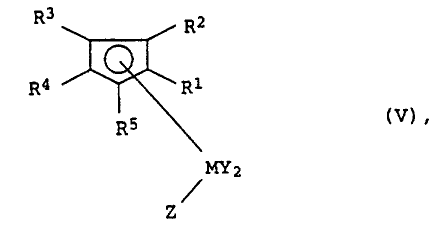 dans laquelle les substituants ont la signification suivante:
M titane, zirconium, hafnium, vanadium, niobium ou tantale,
R¹ à R⁵ hydrogène, alkyle en C₁ à C₁₀, cycloalkyle à 5 à 7 chaînons, qui peut porter à son tour un alkyle en C₁ à C₁₀ comme substituant, aryle en C₆ à C₁₅ ou arylalkyle, tandis qu'éventuellement également deux restes voisins peuvent former ensemble des groupes cycliques saturés ou insaturés présentant 4 à 15 atomes de carbone, ou Si(R⁸)₃ avec
R⁸ alkyle en C₁ à C₁₀, cycloalkyle en C₃ à C₁₀ ou aryle en C₆ à C₁₅,
Z désigne X ou 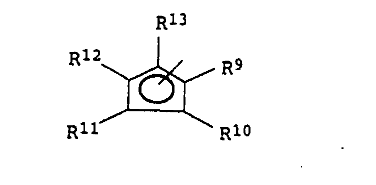
tandis que les restes
R⁹ à R¹³ désignent l'hydrogène ou un groupe alkyle en C₁ à C₁₀, cycloalkyle à 5 à 7 chaînons, qui peut à son tour porter un alkyle en C₁ à C₁₀ comme substituant, aryle en C₆ à C₁₅ ou arylalkyle, et tandis qu'éventuellement également deux restes voisins peuvent former ensemble des groupes cycliques saturés ou insaturés présentant 4 à 15 atomes de carbone, ou Si(R¹⁴)₃ avec
R¹⁴ alkyle en C₁ à C₁₀, aryle en C₆ à C₁₅ ou cycloalkyle en C₃ à C₁₀,
ou tandis que les restes R⁴ et Z forment ensemble un groupement -R¹⁵-A-, dans lequel
R¹⁵ est 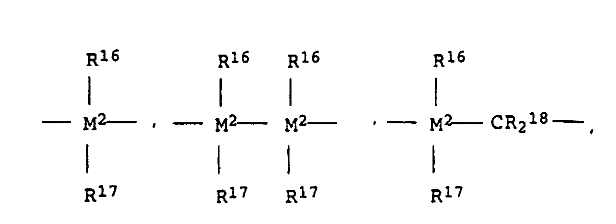 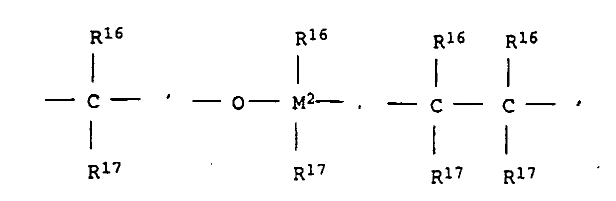 = BR¹⁶, = AlR¹⁶, -Ge-, -Sn-, -O-, -S-, = SO, = SO₂, = NR¹⁶, = = CO, = PR¹⁶ ou = P(O)R¹⁶,
tandis que
R¹⁶, R¹⁷ et R¹⁸ sont identiques ou différents et représentent un atome d'hydrogène, un atome d'halogène, un groupe alkyle en C₁ à C₁₀, un groupe fluoroalkyle en C₁ à C₁₀, un groupe fluoroaryle en C₆ à C₁₀, un groupe aryle en C₆ à C₁₀, un groupe alcoxy en C₁ à C₁₀, un groupe alcényle en C₃ à C₁₀, un groupe arylalkyle en C₈ à C₄₀ ou un groupe alkylaryle en C₇ à C₄₀, ou tandis que deux restes voisins forment à chaque fois un cycle avec les atomes de carbone les reliant, et
M² est le silicium, le germanium ou l'étain,
A représente ―O―, ―S―, 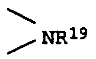 ou 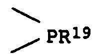
avec
R¹⁹ alkyle en C₁ à C₁₀, aryle en C₆ à C₁₅, cycloalkyle en C₃ à C₁₀, alkylaryle ou Si(R²⁰)₃,
R²⁰ hydrogène, alkyle en C₁ à C₁₀, aryle en C₆ à C₁₅, qui peut à son tour être substitué par des groupes alkyle en C₁ à C₄, ou cycloalkyle en C₃ à C₁₀,
ou tandis que les restes R⁴ et R¹² forment ensemble un groupement -R¹⁵-,
Y fluoro, chloro, bromo ou iodo,
avec un composé de métal de formule générale VI
M⁴(T¹)ₒ(T²)ₚ(T³)_{q} (VI),
dans laquelle
M⁴ représente un métal du groupe principal I., II. ou III. de la classification périodique,
T¹ désigne hydrogène, alkyle en C₁ à C₁₀, aryle en C₆ à C₁₅, alkylaryle ou arylalkyle ayant à chaque fois 1 à 10 atomes de carbone dans le reste alkyle et 6 à 20 atomes de carbone dans le reste aryle,
T² et T³ désigne hydrogène, halogéno, alkyle en C₁ à C₁₀, aryle en C₆ à C₁₅, alkylaryle ou arylalkyle ayant à chaque fois 1 à 10 atomes de carbone dans le reste alkyle et 6 à 20 atomes de carbone dans le reste aryle, ou alcoxy,
o représente un nombre entier de 1 à 3 et
p et q représentent des nombres entiers de 0 à 2, tandis que la somme o+p+q correspond à la valeur de M⁴,
et on poursuit la réaction du mélange obtenu, sans purification, selon les étapes a) à c) ou éventuellement d).

5. Préparation catalytique selon les revendications 1 à 4, **caractérisée par le fait qu'**on utilise comme composé (II) formant des ions métallocénium des acides de Lewis neutres forts, des composés ioniques avec des cations acides de Lewis ou des composés ioniques avec des acides de Brönstedt comme cation.

6. Préparation catalytique selon la revendication 5, **caractérisée par le fait qu'**on utilise comme composé (II) formant des ions métallocénium du borate de tétrakispentafluorophényle.

7. Procédé pour la préparation d'une préparation catalytique appropriée pour la (co)polymérisation d'alc-1-ènes, dans lequel les étapes opératoires correspondent aux étapes a) à c) ou éventuellement d) indiquées dans la revendication 1.

8. Procédé pour la préparation de (co)polymères à partir d'alc-1-ènes en C₂ à C₂₀, **caractérisé par le fait qu'**on effectue la (co)polymérisation en présence d'une préparation catalytique selon les revendications 1 à 6.

9. Procédé selon la revendication 8, **caractérisé par le fait qu'**on effectue la (co)polymérisation en solution.

10. Utilisation d'une préparation catalytique selon les revendications 1 à 6 pour la polymérisation d'alc-1-ènes en C₂ à C₂₀.
